Europäisches Patentamt

European Patent Office

Office européen des brevets

(19)

(11) Numéro de publication : **0 517 569 A1**

# (12) DEMANDE DE BREVET EUROPEEN

(21) Numéro de dépôt : **92401466.5**

(22) Date de dépôt : **27.05.92**

(51) Int. Cl.⁵ : **A01N 65/00,** // (A01N65/00, 65:00, 25:02)

(30) Priorité : **04.06.91 FR 9106753**

(43) Date de publication de la demande :
**09.12.92 Bulletin 92/50**

(84) Etats contractants désignés :
**AT CH DE ES GR IT LI PT**

(71) Demandeur : **LES DERIVES RESINIQUES ET TERPENIQUES**
**30 rue Gambetta**
**F-40105 Dax (FR)**

(72) Inventeur : **Dubearnes, Robert**
**Route de la Plage**
**F-40560 Vielle St. Girons (FR)**
Inventeur : **Dufau, Ghislain**
**La Grange aus Palombes, Route des Artificiers**
**F-40100 Dax (FR)**
Inventeur : **Lauilhe, Jean-Paul**
**14 rue Jean-Jacques Rousseau**
**F-40990 St. Paul les Dax (FR)**

(74) Mandataire : **Varady, Peter et al**
**Cabinet Lavoix 2, Place d'Estienne d'Orves**
**F-75441 Paris Cedex 09 (FR)**

(54) **Composition fongicide à base de tallate de cuivre associé à des dérivés terpéniques et sa fabrication.**

(57)    Cette composition est caractérisée par sa teneur en dérivés terpéniques à base d'alcools et de hydrocarbures terpéniques. Le tallate de cuivre est obtenu à partir d'un mélange d'acides gras et d'acides résiniques au sein même des dérivés terpéniques utilisés dans la composition.

EP 0 517 569 A1

La présente invention a pour objet des compositions auto-émulsionnables utilisées comme fongicides contre les maladies des plantes, dans la protection des matériaux cellulosiques, du bois...; ainsi que leur procédé de fabrication. Ces compositions contiennent un sel organique de cuivre dérivé du tall oil et communément appelé tallate de cuivre.

Par cette dénomination, on entend tous les sels de cuivre d'acides gras, à titre très variables en acides résiniques provenant de la distillation du tall oil. Il est un fait que l'étude ayant abouti à la présente invention a pu être menée sur des teneurs en acides résiniques (AR) très variables allant d'acides gras à 2% AR à des acides gras à plus de 80% AR.

Les propriétés fongicides des tallates de cuivre sont bien connues et plusieurs procédés de fabrication, ainsi que différentes formulations sont décrits dans la littérature. Ainsi, le brevet US-3 262 846 concerne une composition fongicide contenant essentiellement 40 à 50 parties de sels de cuivre d'acides gras et résiniques (préférentiellement 50% AR), de 10 à 15 parties d'émulsifiant non ionique et de 35 à 40 parties d'une coupe pétrolière dont le point d'ébullition est compris entre 315°C et 480°C. Cette composition, du fait de sa phytotoxicité, s'est avérée inutilisable sur certaines plantes ou arbres.

Le brevet GB-1 379 440 décrit une composition de phytotoxicité réduite en utilisation normale par rapport à la précédente. Cette nouvelle formulation est composée de sels de cuivre d'acides gras et résiniques (préférentiellement 50% AR), d'un solvant aromatique (benzène, toluène ou xylène) et d'un mélange de 10% d'émulsionnants anionique et non ionique. Lors d'expérimentation sur la vigne, nous avons pu vérifier que ce type de formulation s'est avérée phytotoxique dans au moins 1/3 des essais, ce qui risquerait de compromettre l'utilisation du tallate de cuivre sur la vigne.

Or selon la présente invention, le fait d'avoir choisi comme solvant un dérivé terpénique, a permis d'obtenir des compositions fongicides ayant une phytotoxicité nettement inférieure à celle des produits antérieurs de la technique.

L'invention a donc pour objet une composition fongicide à base de tallate de cuivre et le cas échéant un ou plusieurs émulsifiants, caractérisée en ce qu'elle comprend un solvant terpénique à base d'alcool(s) terpénique(s), ayant une température d'ébulition entre 150 et 220°C.

On entend par tallate de cuivre un ensemble de sels de cuivre d'acides gras (tels que l'acide oléique, linoléique, etc...) et d'au moins 2% en poids d'acides résiniques provenant de la distillation du tall oil. De préférence, les acides formant le tallate de cuivre comprennent de 20 à 80% en poids d'acides résiniques, avantageusement environ 30-35% en poids. La composition fongicide (concentrée émulsionnable) comprend de 40 à 80% en poids de tallate de cuivre, de préférence environ 60 à 70% en poids.

Le solvant terpénique, de température d'ébullition comprise entre 150°C et 220°C consiste en un dérivé terpénique ou un mélange de dérivés terpéniques comprenant éssentiellement un ou plusieurs alcools terpéniques (terpinéol, bornéol, fenchol, etc) et le cas échéant des carbures terpéniques (comme le dipentène, terpinolène, alloocimène, etc). Le solvant terpénique comprendra avantageusement au moins 50% d'alcool(s) terpénique(s). Dans ce cas, ces produits sont couramment connus dans le commerce sous la dénomination "huiles de pin". Le solvant terpénique constitue notamment 10 à 50%, de préférence 20 à 40% en poids de la composition fongicide concentrée et intervient dans l'activité de celle-ci, comme on le verra ci-après.

L'utilisation d'émulsifiants est nécessaire pour les formulations liquides homogènes de tallate de cuivre, destinées à être appliquées après dilution dans l'eau sous forme d'émulsions. Celles-ci sont donc présentées sous forme de concentrés émulsionnables grâce à l'adjonction d'un ou plusieurs émulsifiants dans les formulations. Une approche possible consiste à utiliser un couple d'émulsifiants, l'un des deux étant relativement lipophile, l'autre plus hydrophile. Par mélange des deux, il est possible d'ajuster la fonction émulsionnante de la formulation. Dans le cadre de l'invention on préfère utiliser des mélanges anhydres de tensio-actifs non ionique et anionique comme des sulfonates organiques. Il faut cependant noter que ce choix n'est pas limitatif, un pouvoir émulsionnant identique pouvant être obtenu à partir d'un autre couple d'émulsifiants. On utilisera notamment de 5 à 15%, par exemple environ 10% en poids d'émulsifiants dans la composition concentrée.

On a constaté que le dérivé terpénique utilisé dans la présente composition, outre ses qualités de solvant, améliore l'efficacité fongicide du tallate de cuivre tout en réduisant sa phytotoxicité, montrant ainsi une action synergique. Il faut noter que l'effet de synergie pour l'adhésivité entre acides résiniques et dérivés terpéniques, en comparaison avec des acides résiniques et solvant pétrolier, permet de réduire le pourcentage de ce type d'acides. Par conséquent, comme l'adhésivité du sel de cuivre est l'un des facteurs importants d'efficacité, des propriétés équivalentes pourront être obtenues avec un taux réduit d'acides résiniques. Enfin, l'utilisation de matières premières d'origine naturelle répond parfaitement à l'orientation actuelle vers des produits phytosanitaires plus écologiques et plus respectueux de l'environnement. Dans ce cas précis, entre donc en considération l'utilisation de matières premières végétales renouvelables par rapport à l'utilisation de matières premières fossiles.

L'invention concerne aussi un procédé de fabrication de la composition fongicide, qui, grâce à l'utilisation d'un solvant terpénique, permet d'obtenir un sel de cuivre en solution, susceptible d'être purifié, d'un titre plus maîtrisable, de manipulation plus commode et de meilleure présentation que les tallates courants obtenus par un procédé en fusion ou à sec.

Le procédé de fabrication est caractérisé en ce que l'on fait réagir de l'hydroxyde de cuivre $Cu(OH)_2$ ou de l'oxyde de cuivre CuO sur un mélange d'acides résiniques et d'acides gras dans un solvant terpénique à base d'alcool(s) terpénique(s), à une température de 120 à 160°C, en présence d'un acide carboxylique en $C_1$ à $C_6$ comme catalyseur, par exemple l'acide acétique.

EXEMPLE 1

a) Obtention d'une composition de tallate de cuivre et d'un solvant terpénique

Matières de départ :
- acides gras à 50% d'acides résiniques (Résinoline BD50 de la société DRT)
      Caractéristiques :
    . Indice d'acide : 161
    . % Acides résiniques : 50,0
    . % Acide oléique : 13,2
    . % Acide linoléique : 9,2
- solvant terpénique : huile de pin (Dertol 50 de la société DRT)
Caractéristiques :
    . % Alcools terpéniques : 52,7
     le reste consistant en carbures terpéniques

Dans un réacteur muni d'un agitateur, d'une prise de température et d'une arrivée de gaz inerte, on mélange 100 parties en poids (p/p) de Résinoline et 41,7 p/p de Dertol aux environs de 50°. On ajoute ensuite à la même température 0,5 p/p d'acide acétique pur et 15 p/p d'hydroxyde de cuivre.

La température est alors portée à 140° où l'eau formée est évacuée. La réaction est terminée lorsqu'il ne se forme plus d'eau. On refroidit ensuite à 110°, température à laquelle est filtré le produit afin d'éliminer en particulier toutes les impuretés dues à l'hydroxyde de cuivre.

On obtient un produit transparent, de belle couleur à 55,8 g cuivre/kg et comprenant :
- 73,2% de tallate de cuivre et
- 26,8% de solvant terpénique.

b) Composition fongicide émulsifiable (formulation concentrée).

On effectue le mélange des produits suivants :

```
- mélange de tallate de cuivre et de
  solvant terpénique obtenu sous a) .... 919 p/p
- mélange d'émulsifiants anionique
  et non  ionique (Triton X-193 de
  Rohm and Haas) ...................... 97 p/p
- solvant terpénique (Dertol 50)
  qsp 1 litre ......................... 12 p/p
```

Cette quantité complémentaire de solvant est ajoutée pour obtenir une formulation finale qui titre environ 51 g/l de cuivre. Elle s'émulsionne immédiatement lors de sa dilution dans l'eau. Elle a été soumise à une expérimentation.

Il est possible de déduire des résultats expérimentaux rassemblés dans le tableau suivant que le remplacement des solvants aromatiques (spécifiquement le xylène) par un solvant terpénique (dans ce cas huile de pin) n'affecte pas l'efficacité du tallate de cuivre, mais par contre améliore la sélectivité sur la vigne. Les notations ont été faites sur essais mildiou après la dernière application de tallate de cuivre/solvant xylène (TC/X) ou de tallate de cuivre/solvant huile de pin (TC/HP), comparativement à un témoin non traité (TNT). Le rythme des applications était de 14 jours.

Sur ces 4 essais, on ne note pas de différence statistique entre les deux formulations de tallate de cuivre au plan de l'efficacité.

Par contre, l'utilisation d'un solvant terpénique représente un gain important de sélectivité (ou réduction de phytotoxicité) pour la vigne. Cela est particulièrement sensible dans l'essai 4 réalisé dans des conditions de vignoble de fond de vallée humide, au cours d'une année relativement fraîche et souvent orageuse sur la localité.

TABLEAU

| LIEU/CEPAGE | TRAITEMENT/ DOSE | EFFICACITE -sur grappes (en % dégats) | PHYTOTOXICITE | |
|---|---|---|---|---|
| | | | -sur grappes (notation sur 10) | -sur feuilles (en %) |
| BEAUNE/PINOT NOIR | TNT / | 58,8% | | |
| | TC/X 250g Cu/ha | 11,8% | / | / |
| | TC/HP 250g Cu/ha | 13,0% | | |
| BORDEAUX/ CABERNET SAUVIGNON | TNT / | 71,9% | 0,5 | |
| | TC/X 250g Cu/ha | 17,5% | 1,5 | / |
| | TC/HP 250g Cu/ha | 20,8% | 1,0 | |
| BORDEAUX/ SAUVIGNON | TNT / | | O | |
| | TC/X 250g Cu/ha | / | 2,5 | / |
| | TC/HP 250g Cu/ha | | 0,9 | |
| AGEN/MERLOT | TNT / | | très faible | 3% |
| | TC/X 250g Cu/ha | / | moyenne | 15% |
| | TC/HP 250g Cu/ha | | très faible | 8% |
| | TNT / | | | 0% |
| | TC/X 375g Cu/ha | / | / | 30% |
| | TC/HP 375g Cu/ha | | | 12% |

EXEMPLES 2 et 3

On répète l'exemple 1, mais en utilisant un mélange d'acide gras à 30-35% AR et à 15% AR respectivement.

On obtient des mélanges de tallate de cuivre titrant respectivement 58,3 g/kg et 57,8 g/kg de cuivre.

Les compositions fongicides émulsionnables correspondantes sont obtenues par ajout d'un mélange d'émulsifiants anionique et non ionique et d'une quantité complémentaire de solvant pour ajuster le titre final en cuivre à 51 g/l.

EXEMPLE 4

On répète l'exemple 2 en mélangeant 100 parties en poids (p/p) de Résinoline et 41,7 p/p de Dertol. Mais, dans ce cas, la synthèse du tallate de cuivre est effectuée par ajout de 5 p/p d'acide acétique pur et 14 p/p d'oxyde de cuivre. On obtient un mélange de tallate de cuivre titrant 57,4 g/kg de cuivre.

La composition fongicide émulsionnable est obtenue comme décrite dans les exemples 2 et 3.

**Revendications**

1. Composition fongicide à base de tallate de cuivre et le cas échéant un ou plusieurs émulsifiants, caractérisée en ce qu'elle comprend un solvant terpénique à base d'alcool(s) terpénique(s) ayant une température d'ébullition entre 150 et 220°C.

2. Composition selon la revendication 1, caractérisée en ce que les acides formant le tallate comprennent de 20 à 80% en poids d'acides résiniques.

3. Composition selon la revendication 2, caractérisée en ce que les acides formant le tallate comprennent 30 à 55% en poids d'acides résiniques.

4. Composition selon l'une des revendications 1 à 3, caractérisée en ce que le solvant terpénique est un mélange d'alcools et de carbures et terpéniques.

5. Composition selon la revendication 4, caractérisée en ce que le solvant terpénique comprend au moins 50% d'alcool(s) terpénique(s).

6. Composition fongicide émulsifiable concentrée, caractérisée en ce qu'elle contient de 40 à 80% en poids de tallate de cuivre, de 10 à 50% en poids de solvant terpénique à base d'alcools terpéniques et de 5 à 15% en poids d'émulsifiant.

7. Composition fongicide selon la revendication 6, caractérisée en ce qu'elle contient de 20 à 40% en poids de solvant terpénique comprenant au moins 50% d'alcool(s) terpénique(s).

8. Procédé de fabrication d'une composition fongicide selon l'une quelconque des revendications 1 à 7, caractérisé en ce que l'on fait réagir de l'hydroxyde de cuivre ou de l'oxyde de cuivre sur un mélange d'acides résiniques et d'acides gras dans un solvant terpénique, à une température de 120 à 160°C, en présence d'un acide carboxylique en $C_1$ à $C_6$ comme catalyseur.

**Revendications pour les Etats contractants suivants: ES, GR, PT**

1. Procédé de préparation d'une composition fongicide à base de tallate de cuivre et le cas échéant un ou plusieurs émulsifiants, ainsi qu'un solvant terpénique à base d'alcool(s) terpénique(s) ayant une température d'ébullition entre 150 et 220°C, caractérisé en ce que l'on fait réagir de l'hydroxyde de cuivre ou de l'oxyde de cuivre sur un mélange d'acides résiniques et d'acides gras dans un solvant terpénique, à une température de 120 à 160°C, en présence d'un acide carboxylique en $C_1$ à $C_6$ comme catalyseur.

2. Procédé selon la revendication 1, caractérisé en ce que les acides formant le tallate comprennent de 20 à 80% en poids d'acides résiniques.

3. Procédé selon la revendication 2, caractérisé en ce que les acides formant le tallate comprennent 30 à 55% en poids d'acides résiniques.

4. Procédé selon l'une des revendications 1 à 3, caractérisé en ce que le solvant terpénique est un mélange d'alcools et de carbures et terpéniques.

5. Procédé selon la revendication 4, caractérisé en ce que le solvant terpénique comprend au moins 50% d'alcool(s) terpénique(s).

6. Procédé selon l'une des revendications 1 à 5 caractérisé en ce qu'on prépare une composition fongicide émulsifiable concentrée, contenant de 40 à 80% en poids de tallate de cuivre, de 10 à 50% en poids de

5

solvant terpénique à base d'alcools terpéniques et de 5 à 15% en poids d'émulsifiant.

7. Procédé selon la revendication 6, caractérisé en ce que la composition contient de 20 à 40% en poids de solvant terpénique comprenant au moins 50% d'alcool(s) terpénique(s).

Office européen
des brevets

# RAPPORT DE RECHERCHE EUROPEENNE

Numero de la demande

EP 92 40 1466

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | CHEMICAL PATENTS INDEX, BASIC ABSTRACTS JOURNAL Section Ch, Week 7746, Derwent Publications Ltd., London, GB; Class C, AN 82601Y & SU-A-537 814 (M. V. STRUNOV) 11 Mars 1977 * abrégé * | | A01N65/00 //(A01N65/00, 65:00,25:02) |
| A | US-A-4 177 288 (A. F. GOHLKE) | | |
| A | CH-A-437 909 (TENNESSEE CORPORATION) | | |

DOMAINES TECHNIQUES RECHERCHES (Int. Cl.5)

A01N

Le présent rapport a été établi pour toutes les revendications

| Lieu de la recherche | Date d'achèvement de la recherche | Examinateur |
|---|---|---|
| LA HAYE | 09 SEPTEMBRE 1992 | DONOVAN T.M. |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons

& : membre de la même famille, document correspondant

EPO FORM 1503 03.82 (P0402)